# EUROPÄISCHE PATENTSCHRIFT

(11) **EP 3 052 365 B1**
(45) Veröffentlichungstag und Bekanntmachung des Hinweises auf die Patenterteilung: **10.03.2021**
(21) Anmeldenummer: 14784197.7
(22) Anmeldetag: 29.09.2014
(51) Int. Cl.: B61C 9/44, F16D 1/033, F16D 1/076

(54) **KUPPLUNG ZUM DREHFESTEN ANSCHLIESSEN EINER WELLE**
COUPLING FOR ROTATIONALLY FIXED CONNECTING OF A SHAFT
ACCOUPLEMENT POUR LE RACCORDEMENT SOLIDAIRE EN ROTATION D'UN ARBRE

(30) Priorität: 01.10.2013 DE 102013219958
(43) Veröffentlichungstag der Anmeldung: 10.08.2016
(73) Patentinhaber: Voith Patent GmbH, 89522 Heidenheim (DE)
(72) Erfinder: STARBATTY, Frank, 89522 Heidenheim (DE); KOCK, Stefan, 52070 Aachen (DE); LOWAG, Michael, 89134 Blaustein (DE)
(74) Vertreter: Voith Patent GmbH - Patentabteilung
(86) Internationale Anmeldenummer: PCT/EP2014/070750
(87) Internationale Veröffentlichungsnummer: WO 2015/049191

(56) Entgegenhaltungen:
- WO-A1-2013/049885
- CH-A- 264 483
- DE-U1-202005 008 758
- GB-A- 824 931
- JP-A- S5 040 945
- JP-A- S58 178 022

## Beschreibung

Die vorliegende Erfindung betrifft eine radial-axial-bewegliche Kupplung mit zwei Kupplungsteilen, sowie einen Antriebsstrang für ein Schienenfahrzeug.

Beispielsweise in Antriebssträngen für Schienenfahrzeuge, wie sie die vorliegende Erfindung gemäß einer Ausführungsform betrifft, werden drehmomentübertragende Verbindungen durch miteinander verschraubte Flansche hergestellt, die über eine stirnseitige Kupplungsverzahnung drehmomentübertragend ineinander eingreifen. Um gegenüber bekannten Klingelnberg-Zyklopalloid-Planverzahnungen und Hirth-Verzahnungen kostengünstigere Lösungen einsetzen zu können, wird herkömmlich auf eine sogenannte Kreuzverzahnung zurückgegriffen. Eine solche Kreuzverzahnung weist auf dem sich über den Umfang erstreckenden Flansch stirnseitig vier Gruppen von Zähnen auf, wobei die Zähne innerhalb einer Gruppe durch Zahnlücken voneinander getrennt sind, einen trapezförmigen Querschnitt aufweisen und zwischen den Zahnflanken flächige Zahnköpfe, die mit ihrer Längserstreckung entlang einer Zahnkopfmittellinie parallel zueinander ausgerichtet sind, angeordnet sind. Jeweils zwei Gruppen von Zähnen sind auf dem Flansch diametral zueinander derart positioniert, dass ihre Zahnköpfe paarweise zueinander fluchten und sich die gedachten Verbindungslinien der Zähne zweier Gruppen kreuzen. Ein Nachteil bei diesen bekannten Kreuzverzahnungen ist jedoch, dass im Flansch Bereiche mit hoher lokaler Belastung auftreten, die in der Praxis zu Rissen führen können.

Weiterhin ist aus WO 2013/049885 A1 eine Klauenkupplung bekannt, die zum drehfesten Anschließen einer Welle dient. Dabei werden zwei identische Kupplungshälften mit Schraubverbindungen gesichert.

Der vorliegenden Erfindung liegt daher die Aufgabe zugrunde, eine radial-axial-bewegliche Kupplung anzugeben, die gegenüber der bekannten Kreuzverzahnung eine höhere Belastbarkeit aufweist, jedoch ähnlich kostengünstig herstellbar ist.

Die erfindungsgemäße Aufgabe wird durch eine Kupplung mit den Merkmalen von Anspruch 1 gelöst. In den abhängigen Ansprüchen sind vorteilhafte und besonders zweckmäßige Ausgestaltungen der Erfindung sowie ein Antriebsstrangs für ein Schienenfahrzeug mit einer entsprechenden Kupplung angegeben.

Eine erfindungsgemäße Kupplungshälfte dient dem drehfesten Anschließen einer Welle. Dabei kann die Kupplungshälfte Bestandteil der Welle selbst oder eines Bauteils sein, an das die Welle zur Drehmomentübertragung angeschlossen wird. Bei der Welle handelt es sich insbesondere um eine rotierende Welle, so dass über die Kupplungshälfte Antriebsleistung übertragen wird. Prinzipiell könnte die Welle jedoch auch als stehende Welle und die Kupplungshälfte entsprechend zur Drehmomentabstützung vorgesehen sein.

Eine erfindungsgemäße Kupplungshälfte weist einen Flansch auf, der auf einer axialen Stirnseite eine Kupplungsverzahnung trägt. Kupplungsverzahnung bedeutet dabei, dass die Verzahnung durch Eingreifen in eine entsprechend gegengleich gestaltete Verzahnung und somit durch Ausbildung einer Vielzahl von formschlüssigen Hinterschneidungen Drehmoment überträgt. Die Kupplungsverzahnung ist als Planverzahnung mit einer Vielzahl von nebeneinander positionierten, durch jeweils eine Zahnlücke getrennte Zähne mit einem trapezförmigen Querschnitt und ebenen Zahnflanken ausgeführt. Zwischen jeweils zwei Zahnflanken ist ein auf der axialen Stirnseite der Kupplungshälfte positionierter flächiger Zahnkopf angeordnet. Der genannte trapezförmige Querschnitt ergibt sich bei einem Schnitt senkrecht zur Erstreckung des Zahnkopfes parallel zu den Zahnlücken.

Erfindungsgemäß verlaufen nun die Zahnköpfe zwischen den Zahnflanken entlang einer Zahnkopfmittellinie, die in Radialrichtung zu einer Rotationsachse der Kupplungshälfte ausgerichtet sind. Unter Rotationsachse ist dabei entweder eine Symmetrieachse bei einer rotationssymmetrischen Planverzahnung zu verstehen oder bei einer umlaufenden Kupplungshälfte die Drehachse, über welcher die Kupplungshälfte umläuft, die insbesondere mit einer entsprechenden Symmetrieachse zusammenfällt. Abweichend von einer Kreuzverzahnung schneiden sich demnach die Zahnkopfmittellinien nicht mehr paarweise, sondern alle gemeinsam im Drehpunkt beziehungsweise in der Rotationsachse.

Gemäß der Erfindung verlaufen somit auch die Zahnköpfe, man könnte diese auch als ebene Zahnscheitel bezeichnen, nicht mehr paarweise senkrecht zueinander, sondern in Radialrichtung der Kupplungshälfte. Hierdurch kann eine wesentlich günstigere Lastverteilung in der Kupplungshälfte bei Einleitung des Drehmomentes über die Verzahnung erreicht werden.

Eine erste Ausführungsform der Erfindung sieht vor, dass eine Breite der Zahnköpfe, das heißt die Erstreckung senkrecht zur Zahnkopfmittellinie zwischen den Zahnflanken, und insbesondere der Zahnflanken mit zunehmendem Radius, auf welchem sie positioniert sind, größer wird. Gemäß einer alternativen Ausführungsform ist die Breite der Zahnköpfe und insbesondere der Zahnflanken über dem Radius der Kupplungshälfte konstant.

Eine Ausführungsform, die besonders mit konstant breiten Zahnköpfen und/oder Zahnflanken über dem Radius kombiniert werden kann, jedoch auch bei entsprechend variierenden Breiten angewendet werden kann, sieht vor, dass die Breite der Zahnlücken mit zunehmendem Radius der Kupplungshälfte größer werden. Auch hier kann alternativ eine konstante Breite über dem Radius vorgesehen sein.

Besonders günstig ist es, wenn alle Zähne über dem Umfang der Kupplungshälfte gleichmäßig verteilt sind. Jedoch kommt auch eine unsymmetrische Verteilung in Betracht.

Gemäß einer vorteilhaften Ausführungsform weisen alle Zahnköpfe eine identische Form, insbesondere eine identische Fläche auf. Zusätzlich oder alternativ können auch alle Zahnlücken eine identische Form und insbesondere eine identische Fläche aufweisen. Auch ist es möglich, dass Zahnköpfe und Zahnlücken dieselbe Form aufweisen.

Gemäß einer vorteilhaften Ausführungsform sind die Zähne entlang einer durch die Zahnkopfmittellinie verlaufenden Spiegelachse spiegelsymmetrisch ausgeführt, in einem Radialschnitt senkrecht zur Längsachse bzw. Drehachse der Kupplungshälfte und/oder in einem Schnitt, der in Umgangsrichtung über der Längsachse bzw. Drehachse der Kupplungshälfte verläuft. Somit kann die Kupplungshälfte bzw. eine Kupplung mit zwei zusammengefügten entsprechenden Kupplungshälften in beide Drehrichtungen gleich belastbar ausgeführt sein.

Besonders vorteilhaft wird eine Kupplungshälfte mit konstanter Breite der Zahnköpfe und insbesondere der Zahnflanken über dem Radius mit einer zweiten Kupplungshälfte mit konstanter Breite der Zahnlücken über dem Radius zur Ausbildung einer Kupplung zusammengefügt bzw. kombiniert.

Gemäß einer Ausführungsform sieht die Erfindung einen Antriebsstrang für ein Schienenfahrzeug nach Anspruch 11 vor.

Obwohl die Erfindung vorliegend anhand eines speziellen Antriebsstranges für ein Schienenfahrzeug beschrieben wurde, ist sie auch in anders gestalteten Schienenfahrzeugen, nicht schienengebundenen Fahrzeugen oder stationären Anlagen anwendbar.

Die Erfindung soll nachfolgend anhand von Ausführungsbeispielen exemplarisch beschrieben werden.

Es zeigen:
- Figur 1: eine Ausführungsform einer erfindungsgemäßen Kupplungshälfte als Bestandteil einer Hohlwelle auf deren Antriebsseite oder Abtriebsseite;
- Figur 2: ein zweites Ausführungsbeispiel einer erfindungsgemäßen Kupplungshälfte als Bestandteil eines sogenannten Kupplungssterns einer radial-axial-beweglichen Kupplung;
- Figur 3: einen Antriebsstrang für ein Schienenfahrzeug, bei welchem eine erfindungsgemäß ausgeführte Kupplungshälfte an einer oder mehreren Stellen zum Einsatz gelangen kann.

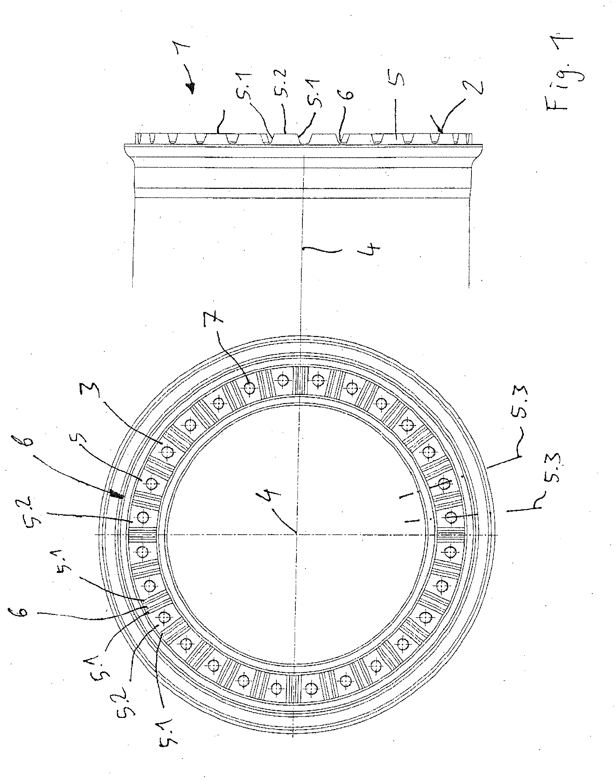

In der Figur 1 ist gemäß einer vorteilhaften Ausführungsform der Erfindung eine Hohlwelle dargestellt, die an einem axialen Ende eine Kupplungshälfte mit einem Flansch 1 aufweist, der auf seiner axialen Stirnseite 2 eine Kupplungsverzahnung 3 trägt. Die Kupplungshälfte ist dabei einmal in einer Draufsicht auf die Rotationsachse 4 und einmal in einer seitlichen Ansicht entlang der Rotationsachse 4 gezeigt.

Die Kupplungsverzahnung 3 weist eine Vielzahl von Zähnen 5 auf, die über dem gesamten Umfang der Kupplungshälfte gleichmäßig verteilt positioniert sind, wobei jeder Zahn 5 beidseitig von einer Zahnlücke 6 eingeschlossen wird. Jeder Zahn 5 weist zwei Zahnflanken 5.1 und einen flächigen Zahnkopf 5.2 zwischen den Zahnflanken 5.1 auf.

Alle Zahnköpfe 5.2 erstrecken sich zwischen den Zahnflanken 5.1 entlang einer Zahnkopfmittellinie 5.3, die in Radialrichtung zu der Rotationsachse 4 ausgerichtet ist, siehe die exemplarisch eingezeichneten Strichpunktlinien in der Figur 1.

Im gezeigten Ausführungsbeispiel ist in jedem Zahnkopf 5.1 eine Gewindebohrung 7 für eine Flanschverschraubung vorgesehen.

Bei dem in der Figur 1 dargestellten Ausführungsbeispiel nimmt die Breite der Zahnköpfe 5.2 über dem Radius der Kupplungshälfte zu. Die Breite der Zahnlücken 6 hingegen ist konstant über dem Radius der Kupplungshälfte.

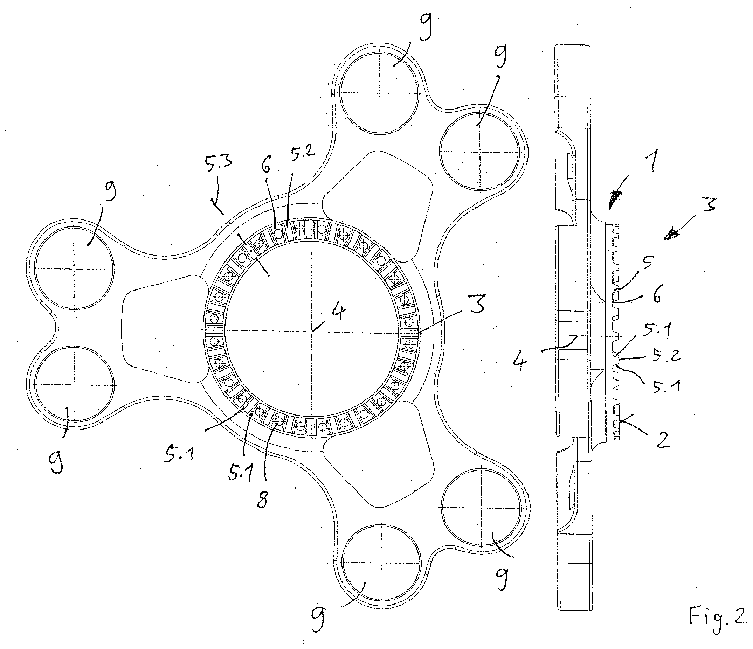

Bei dem Ausführungsbeispiel gemäß der Figur 2 verhält sich dies umgekehrt. Hier ist die Breite der Zahnköpfe 5.2 über dem Radius der Kupplungshälfte konstant, wohingegen die Breite der Zahnlücken 6 mit zunehmendem Radius der Kupplungshälfte zunimmt. Demgemäß kann die in der Figur 2 dargestellte Kupplungshälfte aufgrund ihrer gegengleichen Form der Kupplungsverzahnung 3 in die Kupplungsverzahnung 3 gemäß der Figur 1 formschlüssig und vollflächig anliegend eingreifen.

Entsprechend sind bei dem Ausführungsbeispiel gemäß der Figur 2 Bohrungen 8 für eine Flanschverschraubung in den Zahnlücken 6 positioniert, sodass Schrauben durch diese Bohrungen 8 durchgesteckt und in den Gewindebohrungen 7 gemäß der Figur 1 verschraubt werden können.

Auch bei der Kupplungsverzahnung 3 gemäß der Figur 2 verlaufen die Zahnkopfmittellinien 5.3 in Radialrichtung der Kupplungshälfte durch die Rotationsachse 4.

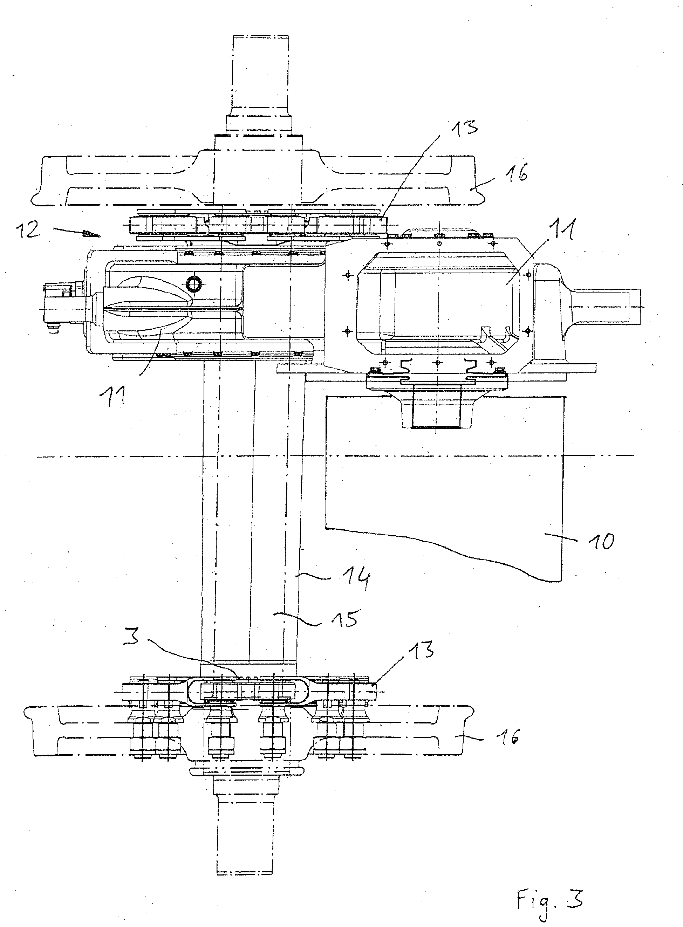

Bei der Kupplungshälfte gemäß der Figur 2 handelt es sich um einen Bestandteil eines Kupplungssterns, der ein Kupplungsteil einer radial-axial-beweglichen Kupplung darstellt. Hierzu weist der Kupplungsstern, der beispielsweise, wie nachfolgend anhand der Figur 3 noch erläutert wird, in einem Antriebsstrang für ein Schienenfahrzeug zwischen einem Getriebe und einem Antriebsrad vorgesehen werden kann, eine Anzahl von Anschlüssen 9 für Lenker (nicht dargestellt) oder andere Elemente auf, die eine Drehmomentübertragung unter Ausgleich eines axialen oder radialen Spiels auf ein zweites hier nicht dargestelltes Kupplungsteil ermöglichen.

In der Figur 3 ist ein Antriebsstrang für ein Schienenfahrzeug exemplarisch dargestellt, der einen Antriebsmotor 10 und ein diesem im Antriebsleistungsfluss nachgeschaltetes Getriebe 11 aufweist. Das Getriebe 11 weist eine Getriebeabtriebswelle 12 auf, die über eine radial-axial-bewegliche Kupplung 13, die insbesondere gemäß der Figur 2 ausgeführt ist, an einer Kupplungshohlwelle 14 drehmomentübertragend angeschlossen ist. Die Kupplungshohlwelle 14 umschließt eine Radachse 15 und ist über eine zweite radial-axial-bewegliche Kupplung 13, insbesondere der genannten Art, an einem Schienenrad 16 angeschlossen. Das Schienenrad 16 ist wiederum drehstarr an der Radachse 15 angeschlossen, die an ihrem zweiten axialen Ende ein weiteres Schienenrad 16 drehstarr trägt, das somit ebenfalls angetrieben wird.

In einer, mehreren oder allen dieser Triebverbindung zwischen zwei Aggregaten im Antriebsleistungsfluss kann eine Kupplung mit zwei Kupplungshälften zum Einsatz kommen, die jeweils eine erfindungsgemäße Kupplungsverzahnung aufweisen, beispielsweise mit einem Paar von Kupplungsverzahnungen, wie sie in den Figuren 1 und 2 dargestellt sind. Schematisch kann man beispielhaft eine solche Kupplungsverzahnung 3 zwischen der Kupplungshohlwelle 14 und der am Schienenrad 16 angeschlossenen radial-axial-beweglichen Kupplung 13 erkennen.

## Patentansprüche

1. Radial-axial-bewegliche Kupplung mit zwei Kupplungsteilen, die drehsteif oder drehelastisch aneinander angeschlossen und in Radialrichtung und Axialrichtung zumindest begrenzt zueinander beweglich sind, wobei beide Kupplungsteile jeweils eine Kupplungshälfte zum drehfesten Anschließen einer Welle aufweisen, wobei jede Kupplungshälfte
1.1 einen Flansch (1) aufweist, der auf einer axialen Stirnseite (2) eine Kupplungsverzahnung (3) trägt, wobei
1.2. die Kupplungsverzahnung (3) als Planverzahnung mit einer Vielzahl von nebeneinander positionierten, durch jeweils eine Zahnlücke (6) getrennte Zähne (5) mit einem trapezförmigen Querschnitt, bei einem Schnitt senkrecht zur Erstreckung des Zahnkopfes (5.2) parallel zu den Zahnlücken (6), und ebenen Zahnflanken (5.1) ausgeführt ist, und
1.3 zwischen jeweils zwei Zahnflanken (5.1) ein auf der axialen Stirnseite (2) der Kupplungshälfte positionierter flächiger Zahnkopf (5.2) angeordnet ist;
1.4 wobei die Zahnköpfe (5.2) zwischen den Zahnflanken (5.1) entlang jeweils einer Zahnkopfmittellinie (5.3) verlaufen, die in Radialrichtung zu einer Rotationsachse (4) der Kupplungshälfte ausgerichtet sind, und wobei
1.5 in der einen Kupplungshälfte in Axialrichtung der Kupplungshälfte nur durch genau jeden Zahnkopf (5.2) und
1.6 in der anderen Kupplungshälfte in Axialrichtung der Kupplungshälfte nur durch genau jede Zahnlücke (6) eine Flanschverschraubung verläuft oder eine Bohrung für eine Flanschverschraubung eingebracht ist.

2. Kupplung gemäß Anspruch 1, **dadurch gekennzeichnet, dass** an wenigstens einer Kupplungshälfte eine Breite der Zahnköpfe (5.2) und insbesondere der Zahnflanken (5.1) mit zunehmendem Radius größer wird.

3. Kupplung gemäß Anspruch 1, **dadurch gekennzeichnet, dass** an wenigstens einer Kupplungshälfte eine Breite der Zahnköpfe (5.2) und insbesondere der Zahnflanken (5.1) über dem Radius konstant ist.

4. Kupplung gemäß einem der Ansprüche 1 bis 3, **dadurch gekennzeichnet, dass** an wenigstens einer Kupplungshälfte eine Breite der Zahnlücken (6) mit zunehmendem Radius größer wird.

5. Kupplung gemäß einem der Ansprüche 1 bis 3, **dadurch gekennzeichnet, dass** an wenigstens einer Kupplungshälfte eine Breite der Zahnlücken (6) über dem Radius konstant ist.

6. Kupplung gemäß einem der Ansprüche 1 bis 5, **dadurch gekennzeichnet, dass** an wenigstens einer Kupplungshälfte die Zähne (5) über dem Umfang der Kupplungshälfte gleichmäßig verteilt sind.

7. Kupplung gemäß einem der Ansprüche 1 bis 6, **dadurch gekennzeichnet, dass** an wenigstens einer Kupplungshälfte eine Breite der Zahnköpfe (5.2) und insbesondere der Zahnflanken (5.1) über dem Radius konstant ist, wohingegen eine Breite der Zahnlücken (6) mit zunehmendem Radius größer wird, wobei die Zahnköpfe (5.2) und die Zahnflanken (5.1) eines Zahns (5) spiegelsymmetrisch über der Zahnkopfmittellinie (5.3) des Zahns (5) ausgeführt sind.

8. Kupplung gemäß einem der Ansprüche 1 bis 7, **dadurch gekennzeichnet, dass** an wenigstens einer Kupplungshälfte eine Breite der Zahnköpfe (5.2) und insbesondere der Zahnflanken (5.1) mit zunehmendem Radius größer wird und eine Breite der Zahnlücken (6) über dem Radius konstant ist, wobei die Zahnköpfe (5.2) und die Zahnflanken (5.1) eines Zahns (5) spiegelsymmetrisch über der Zahnkopfmittellinie (5.3) des Zahns (5) ausgeführt sind.

9. Kupplung gemäß einem der Ansprüche 1 bis 8, **dadurch gekennzeichnet, dass** an wenigstens einer Kupplungshälfte alle Zahnköpfe (5.2) eine identische Form aufweisen und/oder alle Zahnlücken (6) eine identische Form aufweisen.

10. Kupplung gemäß Anspruch 1, wobei ein Kupplungsteil eine Kupplungshälfte gemäß Anspruch 7 und das andere Kupplungsteil eine Kupplungshälfte gemäß Anspruch 8 aufweist, wobei die beiden Kupplungsteile insbesondere mittels einer Flanschverschraubung miteinander verschraubt sind.

11. Antriebsstrang für ein Schienenfahrzeug mit wenigstens einem Antriebsmotor (10), einem dem Antriebsmotor (10) im Antriebsleistungsfluss nachgeschalteten Getriebe (11) und wenigstens einer angetriebenen oder stationären Radachse (15), die wenigstens ein oder zwei Schienenräder (16) trägt, wobei die Radachse (15) gegenüber dem Getriebe (11) im Sinne einer Einfederung beweglich gelagert ist und das Getriebe (11) eine Getriebeabtriebswelle (12) aufweist, die über eine die Radachse (15) umschließende Kupplungshohlwelle (14) drehmomentübertragend an der Radachse (15) oder dem Schienenrad (16) angeschlossen ist, wobei in der Triebverbindung zwischen der Getriebeabtriebswelle (12) und der Kupplungshohlwelle (14) und/oder in der Triebverbindung zwischen der Kupplungshohlwelle (14) und der Radachse (15) oder dem Schienenrad (16) eine radial-axial-bewegliche Kupplung (13) vorgesehen ist,
**dadurch gekennzeichnet, dass**
auf einer Abtriebsseite der Getriebeabtriebswelle (12), einer Antriebsseite der radial-axial-beweglichen Kupplung (13), einer Abtriebsseite der radial-axial-beweglichen Kupplung (13), einer Antriebsseite der Kupplungshohlwelle (14), einer Abtriebsseite der Kupplungshohlwelle (14) und/oder einer Antriebsseite der Radachse (15) oder des Schienenrades (16) eine Kupplung gemäß einem der Ansprüche 1-10 vorgesehen ist.

## Claims

1. Radially/axially movable coupling with two coupling parts which are connected to one another in a torsionally rigid or torsionally elastic manner, and can be moved with respect to one another at least to a limited extent in the radial direction and the axial direction, the two coupling parts having in each case one coupling half for connecting a shaft in a torque-proof manner, each coupling half
1.1 having a flange (1) which supports a coupling toothing system (3) on an axial end side (2),
1.2 the coupling toothing system (3) being configured as a crown toothing system with a multiplicity of teeth (5) with a trapezoidal cross section which are positioned next to one another and are separated by in each case one tooth gap (6), in a section perpendicularly with respect to the extent of the tooth tip (5.2) parallel to the tooth gaps (6) and planar tooth flanks (5.1), and
1.3 a flat tooth tip (5.2) which is positioned on the axial end side (2) of the coupling half being arranged between in each case two tooth flanks (5.1) ;
1.4 the tooth tips (5.2) running between the tooth flanks (5.1) along in each case one tooth tip centre line (5.3), which tooth tip centre lines (5.3) are oriented in a radial direction with respect to a rotational axis (4) of the coupling half, and
1.5 a flange connection running in the one coupling half in the axial direction of the coupling half only through precisely each toothed tip (5.2), and
1.6 a flange connection running, or a bore for a flange connection being made, in the other coupling half in the axial direction of the coupling half only through precisely each tooth gap (6).

2. Coupling according to Claim 1, **characterized in that** a width of the tooth tips (5.2) and, in particular, of the tooth flanks (5.1) becomes greater with an increasing radius on at least one coupling half.

3. Coupling according to Claim 1, **characterized in that** a width of the tooth tips (5.2) and, in particular, of the tooth flanks (5.1) is constant over the radius on at least one coupling half.

4. Coupling according to one of Claims 1 to 3, **characterized in that** a width of the tooth gaps (6) becomes greater with an increasing radius on at least one coupling half.

5. Coupling according to one of Claims 1 to 3, **characterized in that** a width of the tooth gaps (6) is constant over the radius on at least one coupling half.

6. Coupling according to one of Claims 1 to 5, **characterized in that** the teeth (5) are distributed uniformly over the circumference of the coupling half on at least one coupling half.

7. Coupling according to one of Claims 1 to 6, **characterized in that** a width of the tooth tips (5.2) and, in particular, of the tooth flanks (5.1) is constant over the radius on at least one coupling half, whereas a width of the tooth gaps (6) becomes greater with an increasing radius, the tooth tips (5.2) and the tooth flanks (5.1) of a tooth (5) being of mirror-symmetrical configuration over the tooth tip centre line (5.3) of the tooth (5).

8. Coupling according to one of Claims 1 to 7, **characterized in that** a width of the tooth tips (5.2) and, in particular, of the tooth flanks (5.1) becomes greater with an increasing radius on at least one coupling half, and a width of the tooth gaps (6) is constant over the radius, the tooth tips (5.2) and the tooth flanks (5.1) of a tooth (5) being of mirror-symmetrical configuration over the tooth tip centre line (5.3) of the tooth (5).

9. Coupling according to one of Claims 1 to 8, **characterized in that** all tooth tips (5.2) have an identical shape and/or all tooth gaps (6) have an identical shape on at least one coupling half.

10. Coupling according to Claim 1, one coupling part having a coupling half according to Claim 7, and the other coupling part having a coupling half according to Claim 8, the two coupling parts being screwed to one another, in particular, by means of a flange connection.

11. Drive train for a rail vehicle with at least one drive motor (10), a transmission (11) which is connected downstream of the drive motor (10) in the drive power flow, and at least one driven or stationary wheel axle (15) which supports one or two track wheels (16), the wheel axle (15) being mounted such that it can be moved with respect to the transmission (11) in the direction of a compression, and the transmission (11) having a transmission output shaft (12) which is connected in a torque-transmitting manner via a coupling hollow shaft (14) which encloses the wheel axle (15) to the wheel axle (15) or the track wheel (16), a radially/axially movable coupling (13) being provided in the drive connection between the transmission output shaft (12) and the coupling hollow shaft (14) and/or in the drive connection between the coupling hollow shaft (14) and the wheel axle (15) or the track wheel (16), **characterized in that** a coupling according to one of Claims 1 to 10 is provided on an output side of the transmission output shaft (12), a drive side of the radially/axially movable coupling (13), an output side of the radially/axially movable coupling (13), a drive side of the coupling hollow shaft (14), an output side of the coupling hollow shaft (14) and/or a drive side of the wheel axle (15) or of the track wheel (16).

## Revendications

1. Accouplement mobile radialement/axialement comportant deux parties d'accouplement qui sont raccordées l'une à l'autre de manière rigide à la torsion ou de manière élastique en torsion et sont mobiles l'une par rapport à l'autre au moins de manière limitée dans la direction radiale et la direction axiale,
les deux parties d'accouplement comprenant respectivement une moitié d'accouplement pour le raccordement solidaire en rotation d'un arbre, chaque moitié d'accouplement
1.1 comprenant une bride (1) qui porte une denture d'accouplement (3) sur un côté frontal axial (2),
1.2 la denture d'accouplement (3) étant réalisée comme denture plane dotée d'une pluralité de dents (5), positionnées les unes à côté des autres et séparées respectivement par un entredent (6), présentant une section transversale trapézoïdale, en coupe perpendiculairement à l'étendue de la tête de dent (5.2) parallèlement aux entredents (6), et des flancs de dents plans (5.1), et
1.3 une tête de dent plate (5.2) positionnée sur le côté frontal axial (2) des moitiés d'accouplement étant disposée entre deux flancs de dent (5.1) respectivement ;
1.4 les têtes de dent (5.2) s'étendant entre les flancs de dent (5.1) respectivement le long d'une ligne médiane de tête de dent (5.3), lesquelles lignes médianes sont orientées dans la direction radiale par rapport à un axe de rotation (4) des moitiés d'accouplement, et
1.5 un assemblage par brides boulonnées ne s'étendant qu'à travers exactement chaque tête de dent (5.2) dans l'une des moitiés d'accouplement dans la direction axiale de la moitié d'accouplement ou un alésage pour un assemblage par brides boulonnées y étant ménagé et
1.6 un assemblage par brides boulonnées ne s'étendant qu'à travers exactement chaque entredent (6) dans l'autre moitié d'accouplement dans la direction axiale de la moitié d'accouplement ou un alésage pour un assemblage par brides boulonnées y étant ménagé.

2. Accouplement selon la revendication 1, **caractérisé en ce que**, sur au moins une moitié d'accouplement, une largeur des têtes de dent (5.2) et en particulier des flancs de dent (5.1) augmente au fur et à mesure que le rayon augmente.

3. Accouplement selon la revendication 1, **caractérisé en ce que**, sur au moins une moitié d'accouplement, une largeur des têtes de dent (5.2) et en particulier des flancs de dent (5.1) est constante sur le rayon.

4. Accouplement selon l'une des revendications 1 à 3, **caractérisé en ce que**, sur au moins une moitié d'accouplement, une largeur des entredents (6) augmente au fur et à mesure que le rayon augmente.

5. Accouplement selon l'une des revendications 1 à 3, **caractérisé en ce que**, sur au moins une moitié d'accouplement, une largeur des entredents (6) est constante sur le rayon.

6. Accouplement selon l'une des revendications 1 à 5, **caractérisé en ce que**, sur au moins une moitié d'accouplement, les dents (5) sont réparties uniformément sur la périphérie de la moitié d'accouplement.

7. Accouplement selon l'une des revendications 1 à 6, **caractérisé en ce que**, sur au moins une moitié d'accouplement, une largeur des têtes de dent (5.2) et en particulier des flancs de dent (5.1) est constante sur le rayon, tandis qu'une largeur des entredents (6) augmente au fur et à mesure que le rayon augmente, les têtes de dent (5.2) et les flancs de dent (5.1) d'une dent (5) étant réalisés de manière à présenter une symétrie miroir sur la ligne médiane de tête de dent (5.3) de la dent (5).

8. Accouplement selon l'une des revendications 1 à 7, **caractérisé en ce que**, sur au moins une moitié d'accouplement, une largeur des têtes de dent (5.2) et en particulier des flancs de dent (5.1) augmente au fur et à mesure que le rayon augmente et une largeur des entredents (6) est constante sur le rayon, les têtes de dent (5.2) et les flancs de dent (5.1) d'une dent (5) étant réalisés de manière à présenter une symétrie miroir sur la ligne médiane de tête de dent (5.3) de la dent (5) .

9. Accouplement selon l'une des revendications 1 à 8, **caractérisé en ce que**, sur au moins une moitié d'accouplement, toutes les têtes de dent (5.2) présentent une forme identique et/ou tous les entredents (6) présentent une forme identique.

10. Accouplement selon la revendication 1, une partie d'accouplement étant une moitié d'accouplement selon la revendication 7 et l'autre partie d'accouplement étant une moitié d'accouplement selon la revendication 8, les deux parties d'accouplement étant vissées l'une à l'autre en particulier au moyen d'un assemblage par brides boulonnées.

11. Chaîne cinématique pour un véhicule ferroviaire comportant au moins un moteur d'entraînement (10), une transmission (11) montée en aval du moteur d'entraînement (10) dans le flux de puissance d'entraînement et au moins un essieu (15) entraîné ou fixe, qui porte au moins une ou deux roues ferroviaires (16), l'essieu (15) étant monté mobile par rapport à la transmission (11) au sens d'un débattement et la transmission (11) comprenant un arbre de sortie de transmission (12) qui est raccordé à l'essieu (15) ou à la roue ferroviaire (16) avec transmission de couple par le biais d'un arbre creux d'accouplement (14) entourant l'essieu (15), un accouplement mobile radialement/axialement (13) étant prévu dans la liaison d'entraînement entre l'arbre de sortie de transmission (12) et l'arbre creux d'accouplement (14) et/ou dans la liaison d'entraînement entre l'arbre creux d'accouplement (14) et l'essieu (15) ou la roue ferroviaire (16),
**caractérisée en ce**
**qu'**un accouplement selon l'une des revendications 1 à 10 est prévu sur un côté de sortie de l'arbre de sortie de transmission (12), un côté d'entraînement de l'accouplement mobile radialement/axialement (13), un côté de sortie de l'accouplement mobile radialement/axialement (13), un côté d'entraînement de l'arbre creux d'accouplement (14), un côté de sortie de l'arbre creux d'accouplement (14) et/ou un côté d'entraînement de l'essieu (15) ou de la roue ferroviaire (16) .
